# EUROPEAN PATENT SPECIFICATION

(11) **EP 3 168 623 B1**
(45) Date of publication and mention of the grant of the patent: **14.06.2023**
(21) Application number: 16198467.9
(22) Date of filing: 11.11.2016
(51) Int. Cl.: G01N 35/04

(54) **ANALYZER**
ANALYSATOR
ANALYSEUR

(30) Priority: 13.11.2015 JP 2015223496
(43) Date of publication of application: 17.05.2017
(73) Proprietor: FURUNO ELECTRIC CO., LTD., Nishinomiya-City, Hyogo 662-8580 (JP)
(72) Inventor: KOMATSU, Shinya, Nishinomiya-City, Hyogo 662-8580 (JP); TAKASHIMA, Ikumi, Okazaki-shi, Aichi 444-8586 (JP); TSUNO, Akihiro, Okazaki-shi, Aichi 444-8586 (JP); SUGIYAMA, Keisuke, Okazaki-shi, Aichi 444-8586 (JP); HARI, Kenji, Okazaki-shi, Aichi 444-8586 (JP); HAYASHI, Hirotaka, Okazaki-shi, Aichi 444-8586 (JP); HARA, Eiji, Okazaki-shi, Aichi 444-8586 (JP); YAMANAKA, Manabu, Okazaki-shi, Aichi 444-8586 (JP); YOSHIDA, Nagayasu, Okazaki-shi, Aichi 444-8586 (JP)
(74) Representative: Müller Hoffmann & Partner

(56) References cited:
- JP-B2- 3 051 618
- US-A- 4 276 258
- US-A- 5 827 479
- US-A1- 2009 004 057
- US-A1- 2010 248 346

## Description

### Technical Field

This disclosure relates to an analyzer.

### Background of the Invention

Conventionally, there are analyzers which analyze a specimen (serum, blood plasma, urine etc.) by causing reaction between the specimen and a reagent. This kind of analyzers is known to have an inner-circumferential rotational support and an outer-circumferential rotational support which are supportable of reagent containers and rotate individually. For example, JP2013-120160 discloses an automatic analyzer including a reagent disk circumferentially arranged with a plurality of reagent containers, a reaction disk circumferentially arranged with a plurality of reaction containers, and a reagent sampling mechanism that is inserted into the reagent disk through a reagent suction inlet formed in the reagent disk, sucks the reagent, shifts the sucked reagent to an outside of the reagent disk through the reagent suction inlet, and discharges the sucked reagent to the reaction containers. The plurality of reagent containers are concentrically arranged on the outer and inner circumferences of the reagent disk. A rotational drive mechanism including motors (inner and outer circumferential rotational supports) can rotationally shift the reagent containers on the inner circumference and the reagent containers on the outer circumference independently from each other. A reagent container shifting mechanism including a motor makes the reagent containers reciprocally shiftable between the inner and outer circumferences. Further analyzers are known from US 4 276 258 A and US 5 827 479 A.

US 2010 248 346 A1 relates to an analyzer for analyzing a sample using a reagent held in a reagent container. The analyzer comprises a reagent transporter including a circular first reagent table and an annular second reagent table disposed concentrically with the first reagent table on the outer side of the first reagent table. The first reagent table and the second reagent table are respectively configured so that the first reagent container rack and the second reagent container rack holding the reagent containers are removable. The first reagent table and the second reagent table are respectively rotatable in both clockwise and counterclockwise directions, and each table is rotatable so as to be mutually independent of the other. The analyzer further comprises a reagent reservoir disposed so as to cover the perimeter of the reagent transporter.

JP 3 051618 B2 is related to a feed device for dry analysis film. To maintain the compact structure of a moisture absorbent housing section, regarding the film feed device of a biochemical analysis device where cartridges for housing dry analysis films are stored in a ring form. This device is so constituted that a plurality of cartridges housing dry analysis films are stored, and the films are taken out from the cartridges with a film takeout means. Furthermore, the cartridges are arrayed in a ring form and a housing section is formed the part on the ring center side. Also, a moisture absorbent is provided in the section.

### Summary of the Invention

The purpose of this disclosure relates to providing a structure of an analyzer, with which when an operator attaches/removes a container to/from one of inner- and outer-circumferential rotational supports, a hand of the operator does not easily touch a container supported by the other one of the inner- and outer-circumferential rotational supports. The above objects are solved by the claimed matter according to the independent claims.

### Brief Description of the Drawings

The present disclosure is illustrated by way of example and not by way of limitation in the figures of the accompanying drawings, in which the like reference numerals indicate like elements and in which:
Fig. 1 is a view illustrating an example of a structure of a biochemical analyzer according to a first embodiment of this disclosure;
Fig. 2 is a flowchart illustrating an example of a flow of measurement processing performed by a specimen processing apparatus according to the first embodiment;
Fig. 3 is a perspective view illustrating an example of a specimen storage according to the first embodiment;
Fig. 4 is a perspective view illustrating an example of the specimen storage according to the first embodiment, in a state where outer-circumferential and inner-circumferential lids are open;
Fig. 5 is a plan view illustrating the example of the specimen storage according to the first embodiment, in the state where the outer-circumferential and inner-circumferential lids are open;
Fig. 6 is a perspective view illustrating an example of a part of the specimen storage according to the first embodiment;
Fig. 7 is a perspective view illustrating an example of the specimen storage according to the first embodiment, in a state where the outer-circumferential lid is open;
Fig. 8 is a plan view illustrating the example of the specimen storage according to the first embodiment, in the state where the outer-circumferential lid is open;
Fig. 9 is a perspective view illustrating an example of the specimen storage according to the first embodiment, in a state where the inner-circumferential lid is open;
Fig. 10 is a plan view illustrating the example of the specimen storage according to the first embodiment, in the state where the inner-circumferential lid is open;
Fig. 11 is a perspective view illustrating an example of the specimen storage according to the first embodiment, in a state where a cover is removed;
Fig. 12 is a perspective view illustrating an example of an outer-circumferential rotational support of the specimen storage according to the first embodiment, along with containers;
Fig. 13 is a plan view illustrating an example of the outer-circumferential rotational support of the specimen storage according to the first embodiment, along with the containers;
Fig. 14 is a perspective view illustrating an example of the outer-circumferential rotational support of the specimen storage according to the first embodiment;
Fig. 15 is a plan view illustrating the example of the outer-circumferential rotational support of the specimen storage according to the first embodiment;
Fig. 16 is a perspective view illustrating an example of a rack for the outer-circumferential rotational support according to the first embodiment;
Fig. 17 is a plan view illustrating the example of the rack for the outer-circumferential rotational support according to the first embodiment;
Fig. 18 is a perspective view illustrating an example of an inner-circumferential rotational support of the specimen storage according to the first embodiment, along with containers;
Fig. 19 is a plan view illustrating an example of the inner-circumferential rotational support of the specimen storage according to the first embodiment, along with the containers;
Fig. 20 is a perspective view illustrating an example of the inner-circumferential rotational support of the specimen storage according to the first embodiment;
Fig. 21 is a plan view illustrating the example of the inner-circumferential rotational support of the specimen storage according to the first embodiment;
Fig. 22 is a perspective view illustrating an example of a rack for the inner-circumferential rotational support according to the first embodiment;
Fig. 23 is a plan view illustrating the example of the rack for the inner-circumferential rotational support according to the first embodiment;
Fig. 24 is a perspective view illustrating an example of the cover according to the first embodiment, in the state where the outer-circumferential and inner-circumferential lids are open;
Fig. 25 is a perspective view illustrating the example of the cover according to the first embodiment, in the state where the outer-circumferential and inner-circumferential lids are open, seen from a different direction from Fig. 24;
Fig. 26 is a perspective bottom view illustrating the example of the cover according to the first embodiment; and
Fig. 27 is a perspective bottom view illustrating an example not according to the present invention.

### Detailed Description of the Invention

Hereinafter, some illustrative embodiments of this disclosure are described. Configurations and controls of the embodiments described below, and operations and effects which are derivable from the configurations and controls are merely an example. This disclosure is implementable also by other than the configurations and controls disclosed in the embodiments described below, and obtainable of various effects with a basic configuration and control thereof. Note that the embodiments illustratively described below include components having similar/same functions to each other. The components having the similar/same functions may be denoted with the same reference characters and description thereof may be omitted.

### <First Embodiment>

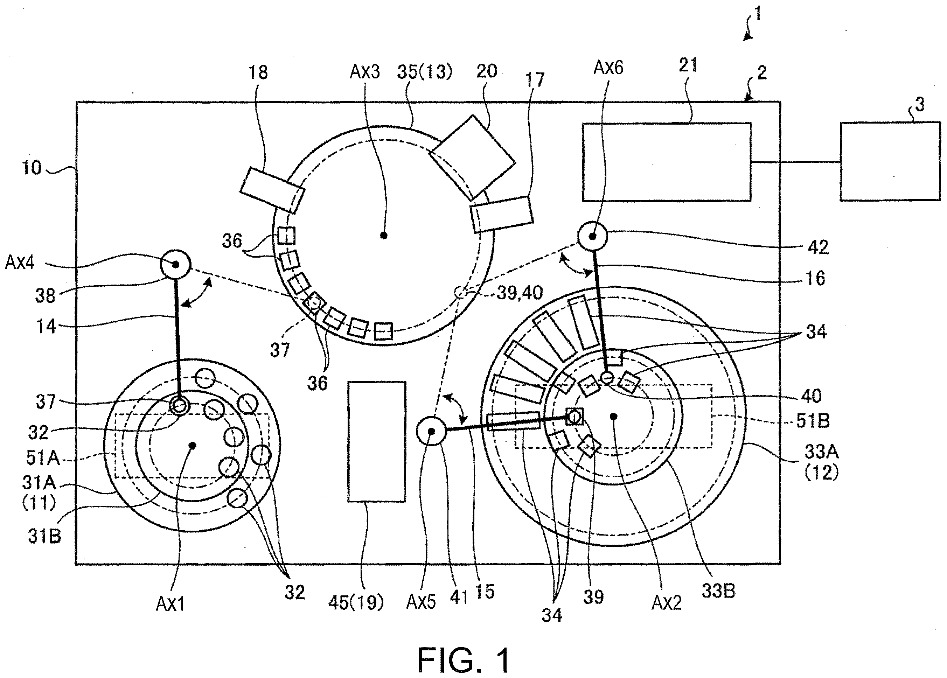

As illustrated in Fig. 1, a biochemical analyzer 1 includes a specimen processing apparatus 2 and an information processing apparatus 3. The specimen processing apparatus 2 obtains reaction liquid by causing reaction between a specimen (serum, blood plasma, urine etc.) and a reagent, and measures light absorbance of the reaction liquid. The information processing apparatus 3 obtains an amount of component of the specimen, such as cholesterol, based on the measured light absorbance by the specimen processing apparatus 2. In other words, the biochemical analyzer 1 analyzes the specimen by a colorimetric method. This kind of biochemical analyzer 1 is used, for example, for examination of the specimen for various examination items, such as a cholesterol value. The biochemical analyzer 1 is one example of the analyzer of this disclosure.

The information processing apparatus 3 includes a controller, a memory, a display unit, and a user-interface (neither of them illustrated). The controller has a CPU (Central Processing Unit), a ROM (Read Only Memory), and a RAM (Random Access Memory). The information processing apparatus 3 is communicable with the specimen processing apparatus 2. The information processing apparatus 3 may be comprised of a personal computer.

The specimen processing apparatus 2 includes a casing 10, a specimen storage 11, a reagent storage 12, a reaction tank 13, a specimen dispenser 14, reagent dispensers 15 and 16, stirrers 17 and 18, a measurer 19, a cleanser 20, and a controller 21.

The specimen storage 11 has rotational supports 31A and 31B. The rotational supports 31A and 31B are supported by the casing 10 to be individually rotatable by a drive device 51A about a rotational axis Ax1 extending in up-and-down directions of the casing 10. For example, the drive device 51A includes a rotational source (motor etc.) and a rotation transmission mechanism (gear, belt, pulley etc.). The drive source may be shared between the two rotational supports 31A and 31B or provided to each of the rotational supports 31A and 31B. The rotational supports 31A and 31B are supportable of a plurality of specimen containers 32. The plurality of specimen containers 32 are set on the rotational supports 31A and 31B, placed around the rotational axis Ax1 so as to integrally rotate with the rotational supports 31A and 31B. The specimen containers 32 supported by the rotational support 31B are located radially inward of the specimen containers 32 supported by the rotational support 31A with respect to the rotational axis Ax1. Note that, Fig. 1 illustrates some (not all) of the plurality of specimen containers 32.

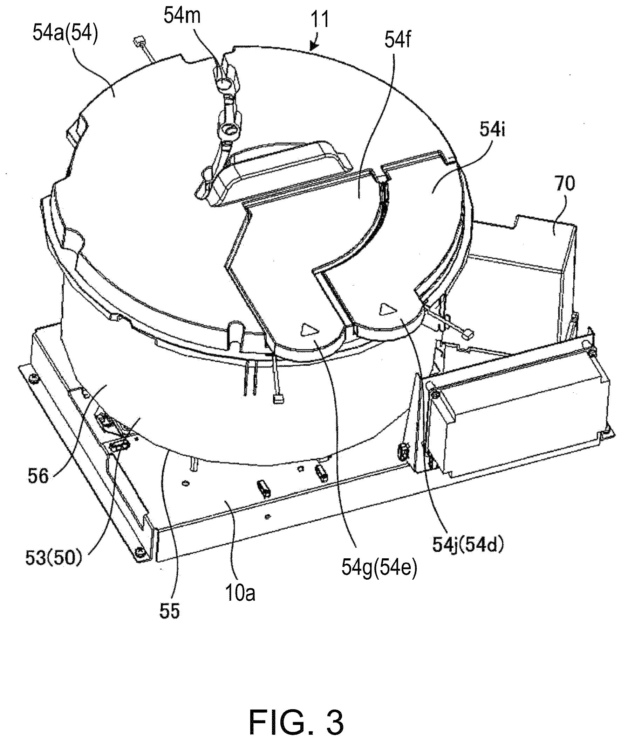

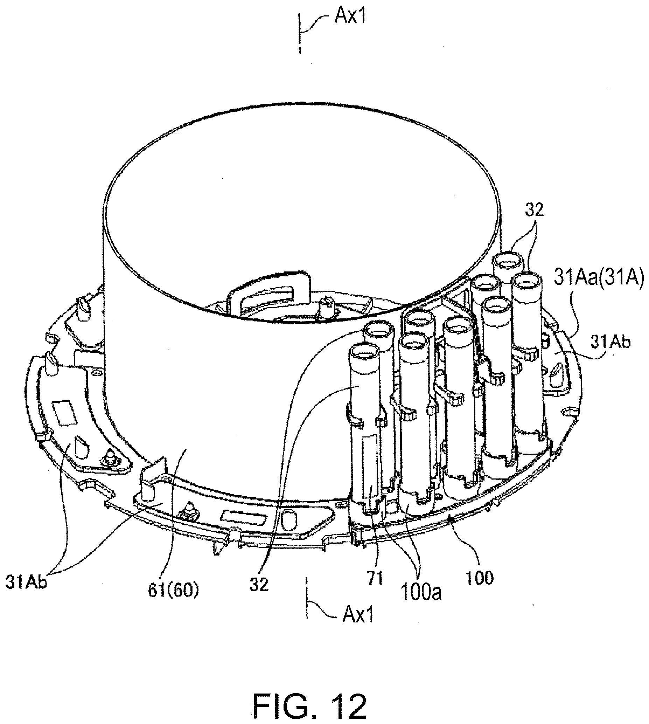

Each specimen container 32 contains a specimen. Further the specimen container 32 is applied with a bar code 71 (Fig. 12) containing identification information of the specimen container 32, and this bar code 71 is read by a bar code reader 70 (Fig. 3) provided at a position facing the specimen container 32 inside the specimen storage 11. Note that in Fig. 12, the bar code 71 is illustrated only on one of the specimen containers 32 and omitted on other specimen containers 32. Further the bar code 71 is illustrated schematically.

The reagent storage 12 has rotational supports 33A and 33B. The rotational supports 33A and 33B are supported by the casing 10 to be individually rotatable by a drive device 51B about a rotational axis Ax2 extending in the up-and-down directions of the casing 10. For example, the drive device 51B includes a rotational source (motor etc.) and a rotation transmission mechanism (gear, belt, pulley etc.). The drive source may be shared between the two rotational supports 33A and 33B or provided to each of the rotational supports 33A and 33B. The rotational supports 33A and 33B are supportable of a plurality of reagent containers 34. The plurality of reagent containers 34 are placed in the rotational supports 33A and 33B around the rotational axis Ax2 so as to integrally rotate with the rotational supports 33A and 33B. The reagent containers 34 supported by the rotational support 33B are located radially inward of the reagent containers 34 supported by the rotational support 33A with respect to the rotational axis Ax2. Note that, Fig. 1 illustrates some (not all) of the plurality of reagent containers 34.

Each reagent container 34 contains a reagent. Further the reagent container 34 is applied with a bar code (not illustrated) containing identification information of the reagent container 34, and this bar code is read by a bar code reader (not illustrated) provided at a position facing the reagent container 34 inside the reagent storage 12.

The reaction tank 13 has a substantially-circular rotor body 35 in a plan view. The rotor body 35 is supported by the casing 10 to be rotatable by a drive mechanism (not illustrated) about a rotational axis Ax3 extending in the up-and-down directions of the casing 10. The rotor body 35 is provided with a plurality of light-transparent reaction containers 36. The plurality of reaction containers 36 are placed around the rotational axis Ax3 in the rotor body 35 so as to integrally rotate with the rotor body 35. Note that, Fig. 1 illustrates some (not all) of the plurality of reaction containers 36. Each reaction container 36 may be structured by a cuvette. The specimen and reagent are dispensed into the reaction container 36, and react with each other within the reaction container 36 to become reaction liquid. The reaction tank 13 is kept at a temperature suitable for stimulating the reaction between the specimen and the reagent.

The specimen dispenser 14 has a pipette 37 and a drive mechanism 38. The pipette 37 is rotated by the drive mechanism 38 about a rotational axis Ax4 extending in the up-and-down directions of the casing 10, between a position above the specimen storage 11 and a position above the reaction tank 13. Further the pipette 37 is moved in the up-and-down directions of the casing 10 by the drive mechanism 38. The pipette 37 is connected with a suction-discharge mechanism configured to perform suction and discharge of the specimen. The specimen dispenser 14 sucks the specimen inside the specimen container 32 by the pipette 37 inserted into the specimen container 32, then inserts the pipette 37 into the reaction container 36, and discharges (dispenses) the specimen into the reaction container 36 from the pipette 37.

The reagent dispensers 15 and 16 have pipettes 39 and 40 and drive mechanisms 41 and 42, respectively. The pipettes 39 and 40 are rotated by the drive mechanisms 41 and 42 about rotational axes Ax5 and Ax6 extending in the up-and-down directions of the casing 10, respectively, between a position above the reagent storage 12 and a position above the reaction tank 13. Further the pipettes 39 and 40 are moved in the up-and-down directions of the casing 10 by the drive mechanisms 41 and 42, respectively. Moreover the pipettes 39 and 40 are connected with suction-discharge mechanisms configured to perform suction and discharge of the reagents. The reagent dispensers 15 and 16 suck the reagents inside the reagent containers 34 by the pipettes 39 and 40 inserted into the reagent containers 34, then insert the pipettes 39 and 40 into the reaction containers 36, and discharge (dispense) the reagents into the reaction containers 36 from the pipettes 39 and 40, respectively.

The measurer 19 includes a light source 45 and a light receiver (not illustrated). The light source 45 is located outside the reaction tank 13, and emits light (e.g., halogen light) toward the reaction container 36. The light receiver receives light penetrated the reaction container 36 and measures the intensity of the received light. The measurer 19 obtains the light absorbance of the reaction liquid inside the reaction container 36 based on the intensity of light measured by the light receiver. The light source 45 is capable of switching a wavelength of light emitted. Thus, the measurer 19 is capable of measuring light absorbances by using a plurality of kinds of light with different wavelengths.

Each of the stirrers 17 and 18 has a stirring member (not illustrated) which is inserted into the reaction container 36. The stirrers 17 and 18 stir the specimen and the reagent dispensed into the reaction containers 36 by rotating the stirring members inserted into the reaction containers 36.

The cleanser 20 removes (discards) the reaction liquid from the reaction container 36 and cleanses inside the reaction container 36.

The controller 21 has a CPU, a ROM and a RAM. The controller 21 executes various operations and controls of various parts of the specimen processing apparatus 2.

The specimen processing apparatus 2 having the above configuration performs measurement processing. During the measurement processing, the specimen storage 11, the reagent storage 12, and the reaction tank 13 are moved (to be more specific, rotational members thereof described later in detail rotate) to given positions where they receive the treatments of the specimen dispenser 14, the reagent dispensing parts 15 and 16, the stirrers 17 and 18, the measurer 19, and the cleanser 20.

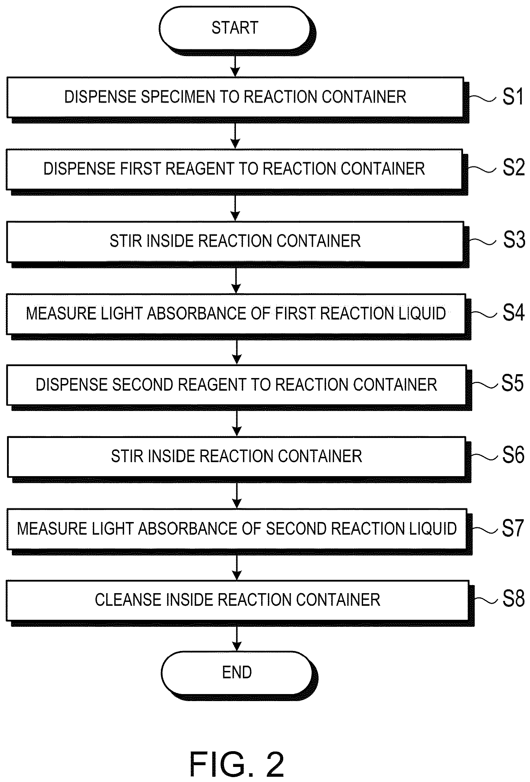

As illustrated in Fig. 2, in the measurement processing, the specimen dispenser 14 dispenses a given specimen inside the specimen storage 11 into a given reaction container 36 of the reaction tank 13 (S1). The reagent dispenser 15 dispenses a first reagent inside the reagent storage 12 corresponding to a given examination item, into the given reaction container 36 (S2). The stirrer 17 stirs inside the given reaction container 36 (S3). After a given period of time from the stirring, the measurer 19 measures the light absorbance of a first reaction liquid obtained from reaction between the given specimen and the first reagent inside the given reaction container 36 (S4). The measured light absorbance is transmitted to the information processing apparatus 3.

Then the reagent dispenser 16 dispenses a second reagent inside the reagent storage 12 corresponding to the given examination item, into the given reaction container 36 (S5). The stirrer 18 stirs inside the given reaction container 36 (S6). After a given period of time from the stirring, the measurer 19 measures the light absorbance of a second reaction liquid obtained from reaction between the first reaction liquid (specimen and first reagent) and the second reagent inside the given reaction container 36 (S7). The measured light absorbance is transmitted to the information processing apparatus 3. Then the cleanser 20 removes the second reaction liquid inside the given reaction container 36 and cleanses inside the reaction container 36 (S8). Once the two light absorbances are obtained by such measurement processing, the information processing apparatus 3 obtains an amount of component of the specimen (e.g., cholesterol value) based on the light absorbances. Note that the processes of S1 to S8 are repeated for every specimen and examination item. Each of the pipettes 37, 39 and 40 is cleansed by a cleanser (not illustrated) at a given timing.

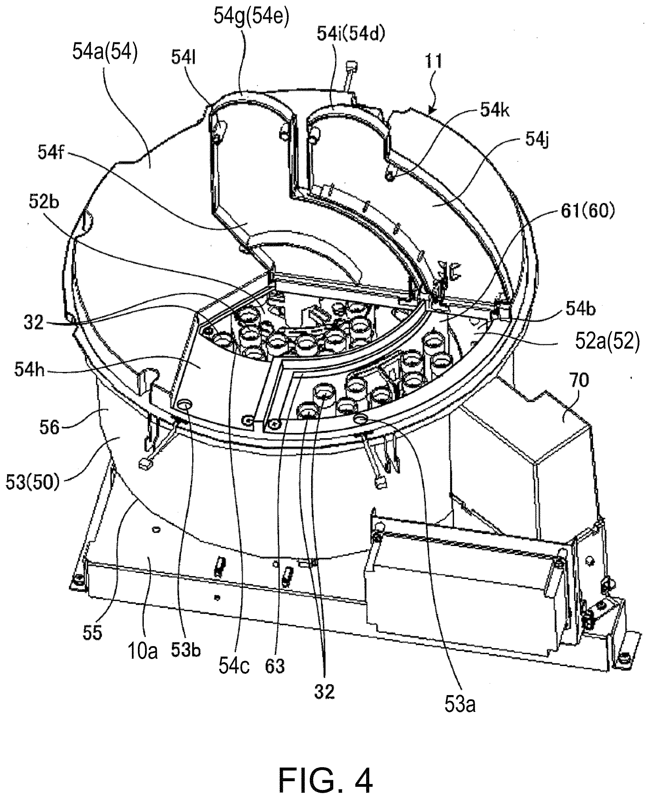

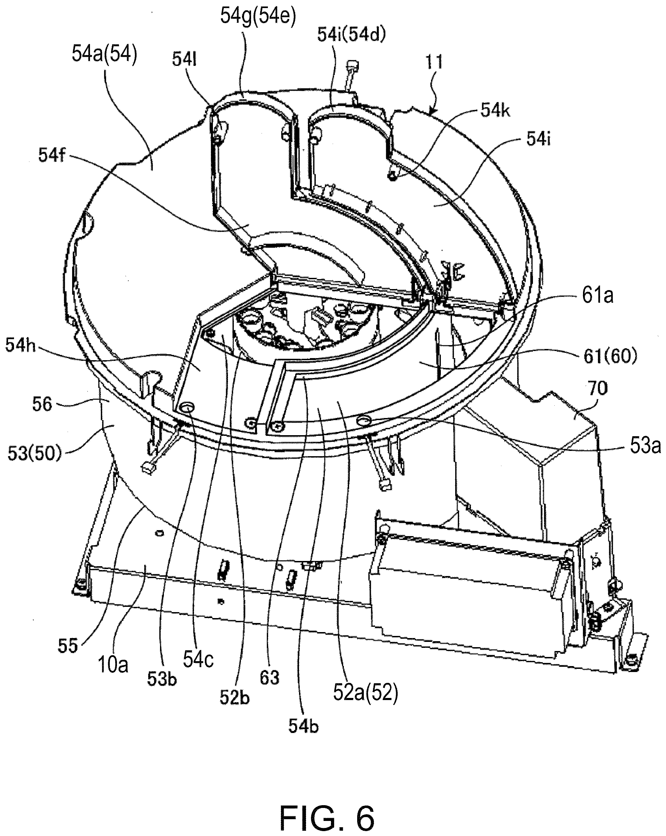

Next, the specimen storage 11 is described in detail. As illustrated in Fig. 3, the specimen storage 11 includes a housing 50. As illustrated in Figs. 4 to 10, the housing 50 is formed with an accommodation space 52 therein, and the accommodation space 52 accommodates the rotational supports 31A and 31B and the specimen containers 32 supported by the rotational supports 31A and 31B. The housing 50 is supported by a base component 10a provided to the casing 10. The base component 10a is coupled to an internal surface of a bottom wall (not illustrated) of the casing 10. The housing 50 may be referred to as the container.

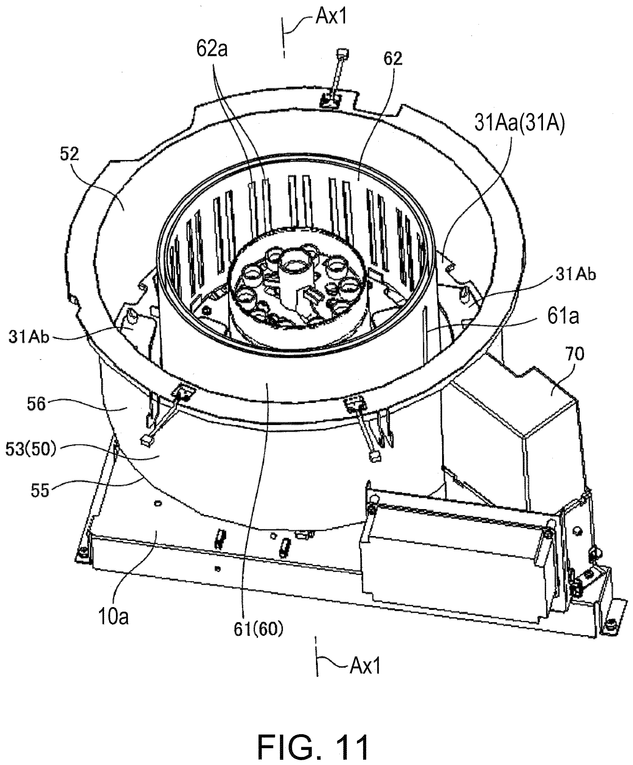

As illustrated in Figs. 3 to 10, the housing 50 includes a main body 53 and a cover 54. As illustrated in Fig. 11, the main body 53 has a circular-plate-like bottom wall 55 and a cylindrical side wall 56 extending upward from an outer circumferential end portion of the bottom wall 55. The main body 53 is formed with the accommodation space 52 adjacent to the bottom wall 55 and the side wall 56, and an upper end of the main body 53 is open.

The cover 54 illustrated in Fig. 3 etc. is detachably coupled to the upper end of the main body 53. The cover 54 covers the top of the accommodation space 52. By removing the cover 54 from the main body 53, the accommodation space 52 becomes entirely open (Fig. 11). Note that, detailed description of the cover 54 is given below. The cover 54 is one example of the cover member of this disclosure.

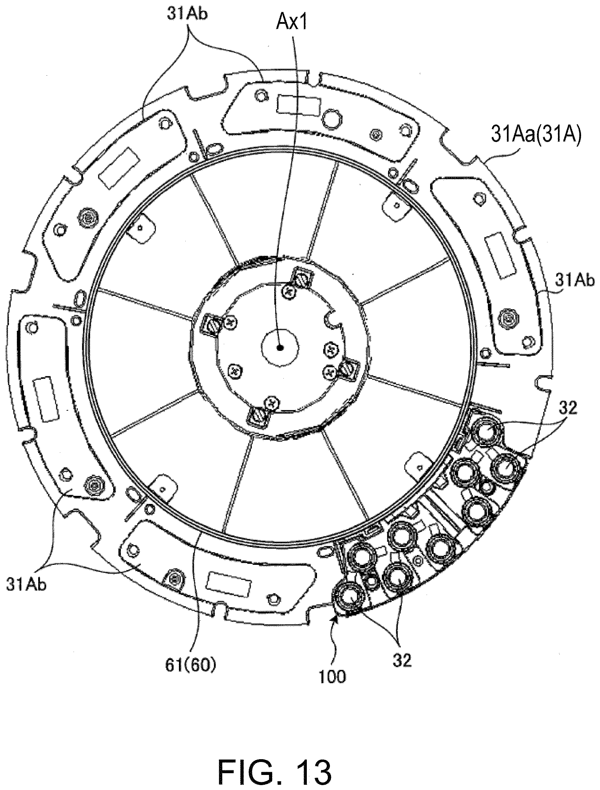

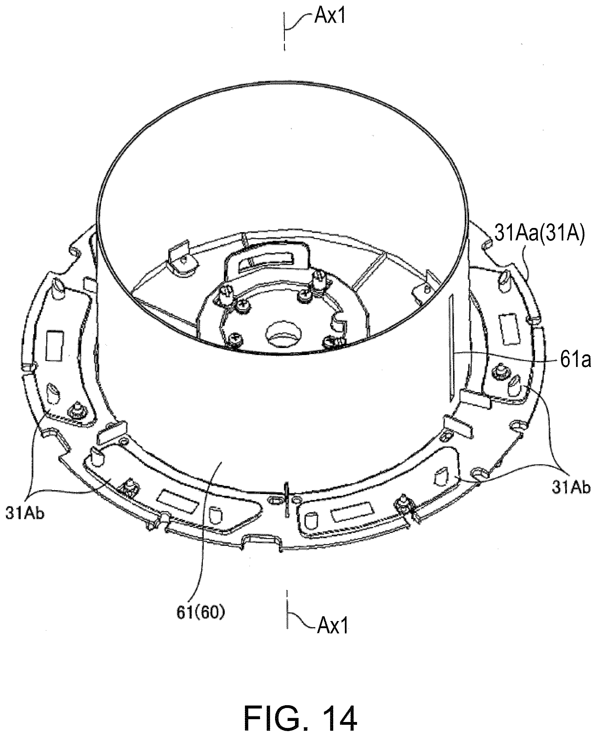

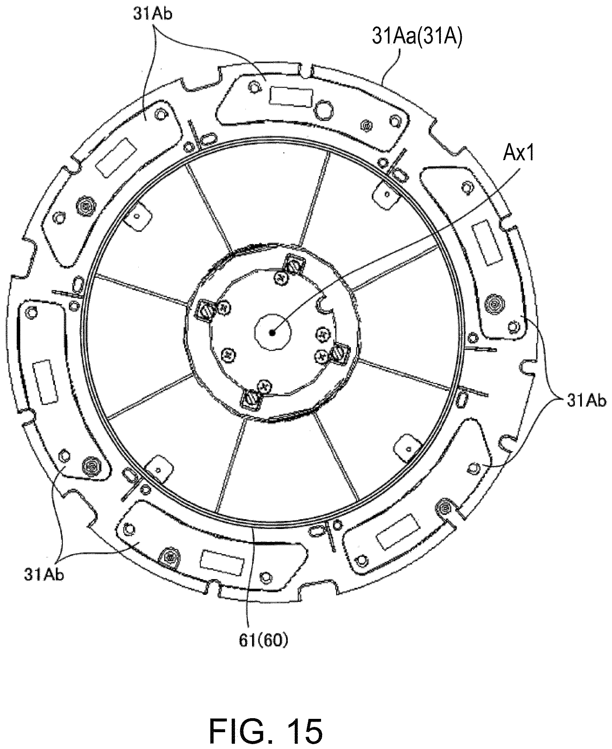

As illustrated in Figs. 12 to 15, the rotational support 31A has a circular plate part 31Aa centering on the rotational axis Ax1. A plurality of supporting parts 31Ab are provided on an upper surface of the circular plate part 31Aa and arranged circumferentially. For example, each supporting part 31Ab detachably supports a rack 100 configured to support two or more of the specimen containers 32. In other words, the supporting part 31Ab detachably supports the specimen containers 32 via the rack 100. Note that the supporting part 31Ab may directly support the specimen containers 32. The rotational support 31A rotates about the rotational axis Ax1 with respect to the housing 50 and the rotational support 31B. The rotational support 31A is one example of the first rotational support of this disclosure, and the specimen container 32 supported by the rotational support 31A is one example of the first container of this disclosure.

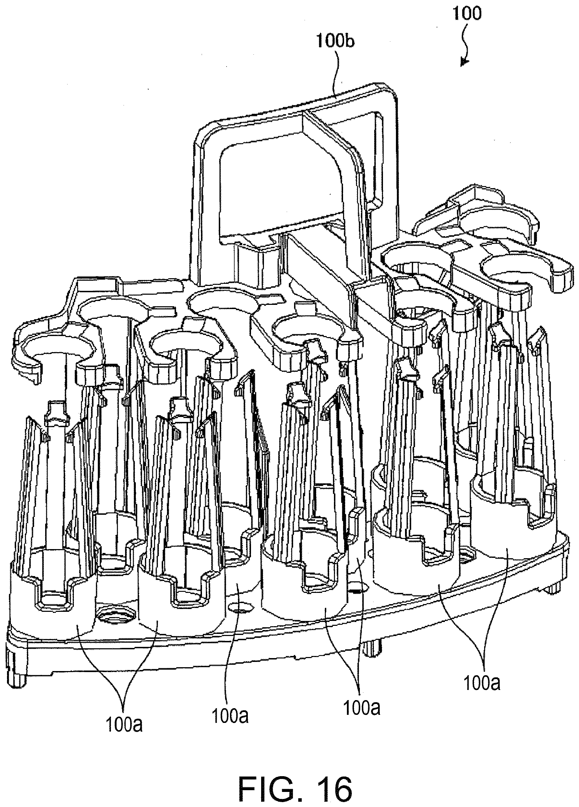

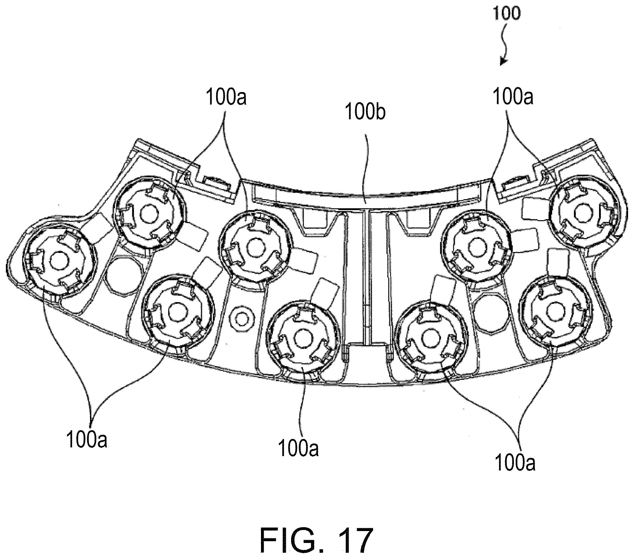

As illustrated in Figs. 16 and 17, the rack 100 has a plurality of supporting parts 100a configured to support the specimen containers 32, and a handle 100b.

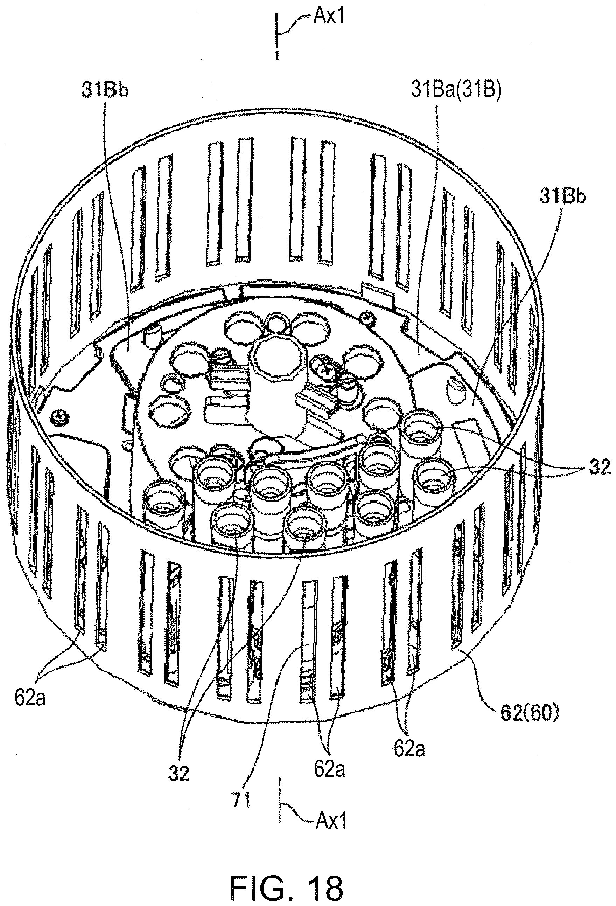

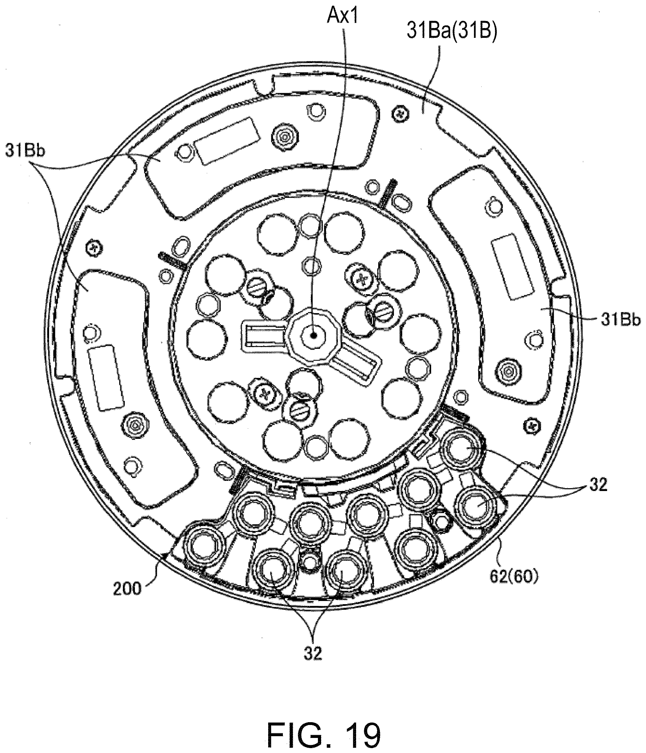

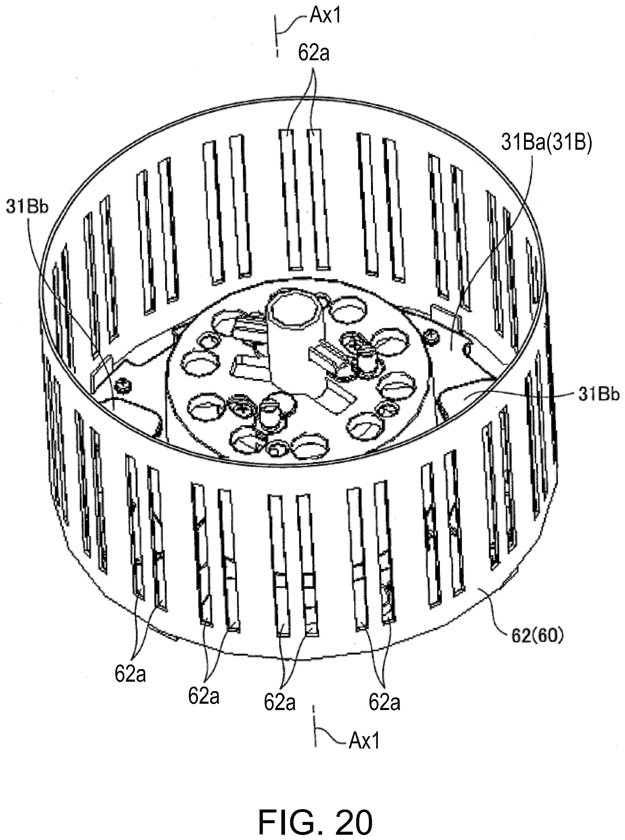

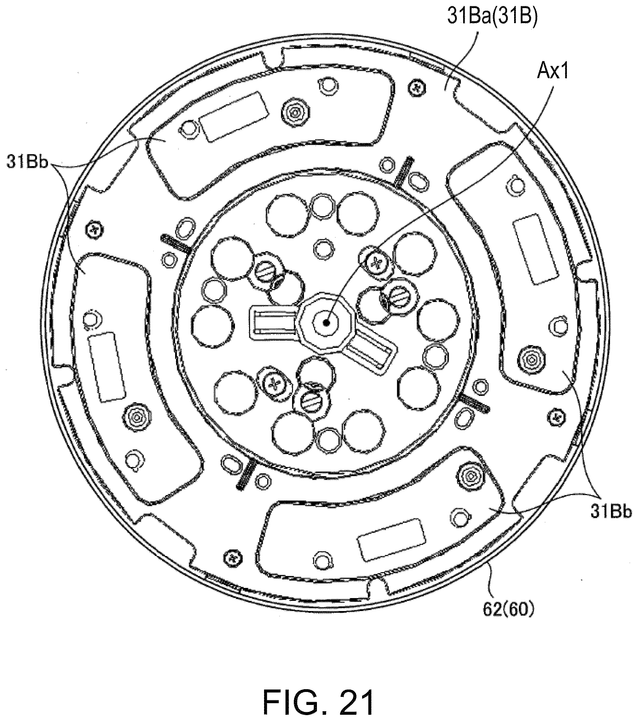

As illustrated in Figs. 18 to 21, the rotational support 31B has a circular plate part 31Ba centering on the rotational axis Ax1. The circular plate part 31Ba is located above the circular plate part 31Aa. The radius of the circular plate part 33Ba is smaller than that of the circular plate part 31Aa. A plurality of supporting parts 31Bb are provided on an upper surface of the circular plate part 31Ba and arranged circumferentially. For example, each supporting part 31Bb detachably supports a rack 200 configured to support two or more of the specimen containers 32. In other words, the supporting part 31Bb detachably supports the specimen containers 32 via the rack 200. Note that the supporting part 31Bb may directly support the specimen containers 32. The rack 200 and the specimen containers 32 supported by the supporting part 31Bb are located radially inward of the rack 100 and the specimen containers 32 supported by the supporting part 31Ab. In other words, the rotational support 31B supports the specimen containers 32 at the radially inward side of the specimen containers 32 supported by the rotational support 31A with respect to the rotational axis Ax1. The rotational support 31B rotates about the rotational axis Ax1 with respect to the housing 50 and the rotational support 31A. The rotational support 31B is one example of the second rotational support of this disclosure, and the specimen container 32 supported by the rotational support 31B is one example of the second container of this disclosure.

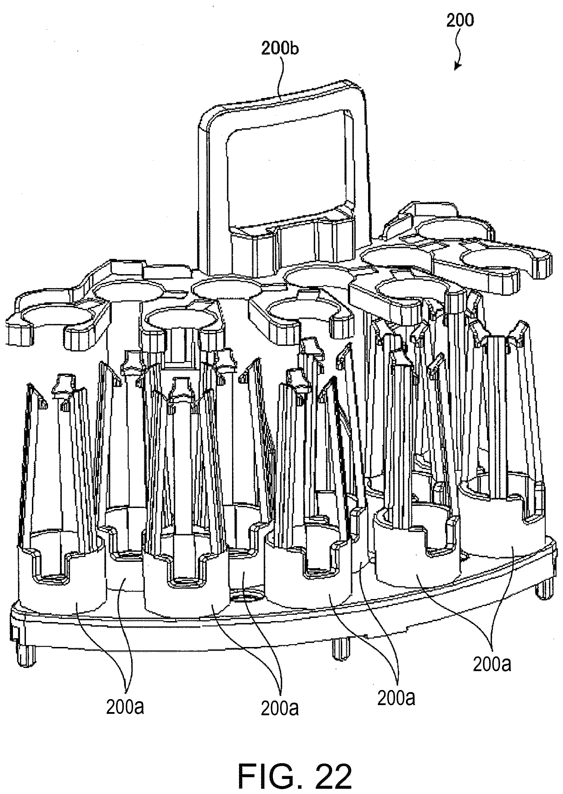

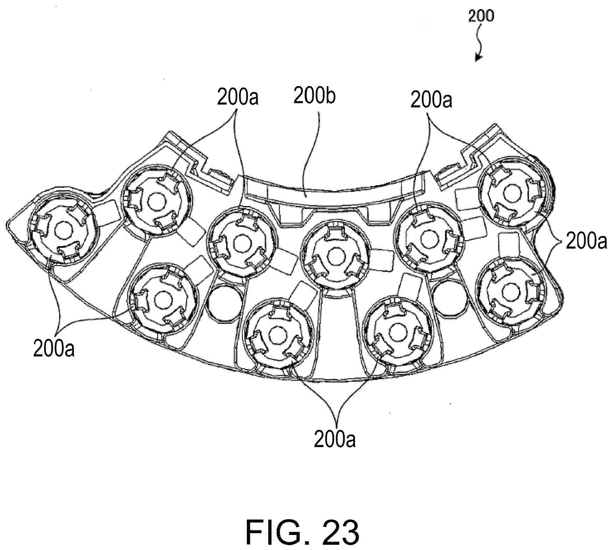

As illustrated in Figs. 22 and 23, the rack 200 has a plurality of supporting parts 200a configured to support the specimen containers 32, and a handle 200b.

Further as illustrated in Fig. 11, a partition 60 is provided inside the housing 50. The partition 60 is located between the specimen containers 32 supported by the rotational support 31A and the specimen containers 32 supported by the rotational support 31B (Fig. 4). The partition 60 extends circumferentially.

The partition 60 has partition walls 61 and 62. As illustrated in Figs. 12 to 15, the partition wall 61 is provided to the circular plate part 31Aa of the rotational support 31A. The partition wall 61 has a cylindrical shape centering on the rotational axis Ax1. The partition wall 61 is located radially inward of the specimen containers 32 supported by the rotational support 31A with respect to the rotational axis Ax1. Further as illustrated in Fig. 11, the partition wall 61 is formed with a single open section 61a (slit). A light emitted from the bar code reader 70 and a reflection light caused by the emitted light reflecting on the bar code 71 which is provided on the specimen container 32 supported by the rotational support 31B (Fig. 12) penetrate the open section 61a. Note that, the open section 61a may be covered by a light-transparent member. Moreover, a plurality of slits 61a may be formed and circumferentially separated from each other. The partition wall 61 is one example of the first partition wall of this disclosure.

As illustrated in Figs. 18 to 21, the partition wall 62 is provided to the circular plate part 31Ba of the rotational support 31B. The partition wall 62 has a cylindrical shape centering on the rotational axis Ax1. The partition wall 62 is located radially outward of the specimen containers 32 supported by the rotational support 31B with respect to the rotational axis Ax1. Further the partition wall 62 is located inward of the partition wall 61 and separated therefrom. The partition wall 62 is formed with a plurality of open sections 62a (slits). The plurality of open sections 62a are arranged around the rotational axis Ax1 and separated from each other. The open section 62a may be provided for every specimen container 32 supported by the supporting part 31Bb of the rotational support 31B, or provided for given number (plurality) of specimen containers 32. A light emitted from the bar code reader 70 and a reflection light caused by the emitted light reflecting on the bar code 71 which is provided on the specimen container 32 supported by the rotational support 31B penetrate the open section 62a. When one of the open sections 62a overlaps with the open section 61a, reading of the bar code 71 by the bar code reader 70 becomes possible. Note that, each open section 62a may be covered by a light-transparent member. The partition wall 62 is one example of the second partition wall of this disclosure.

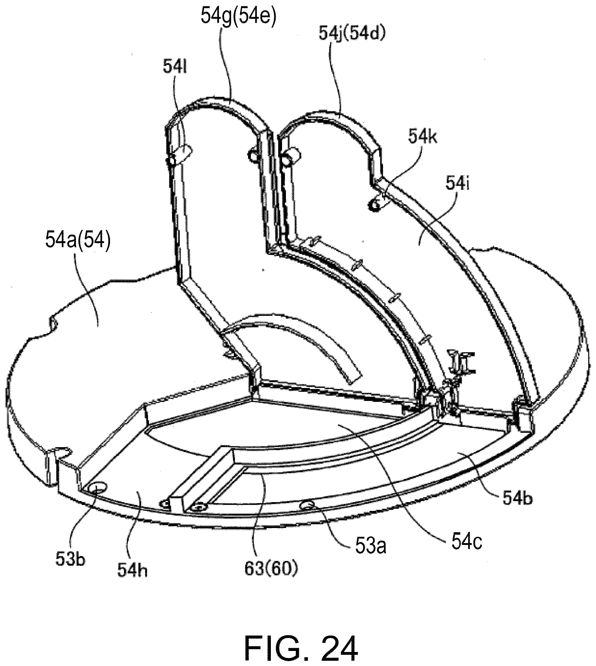

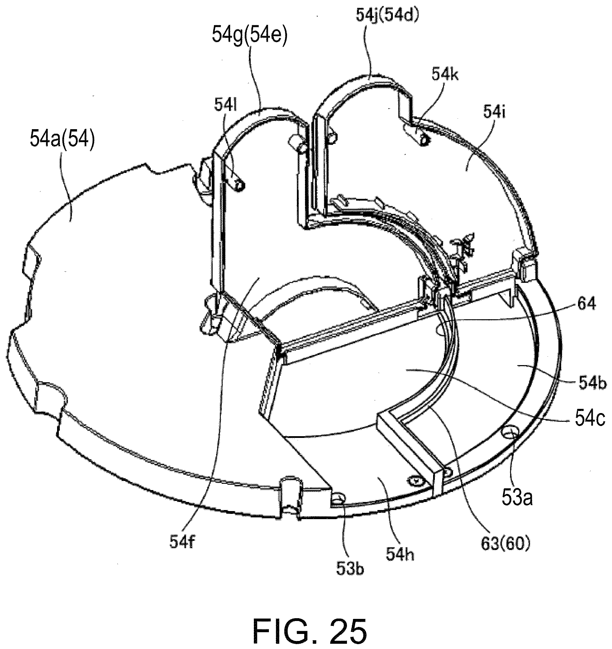

Next the cover 54 is described. As illustrated in Figs. 24 to 26, the cover 54 is provided with a wall part 54a, lids 54d and 54e.

The wall part 54a covers the specimen containers 32 supported by the rotational support 31A and the specimen containers 32 supported by the rotational support 31B in one of the directions of the rotational axis Ax1 (from above).

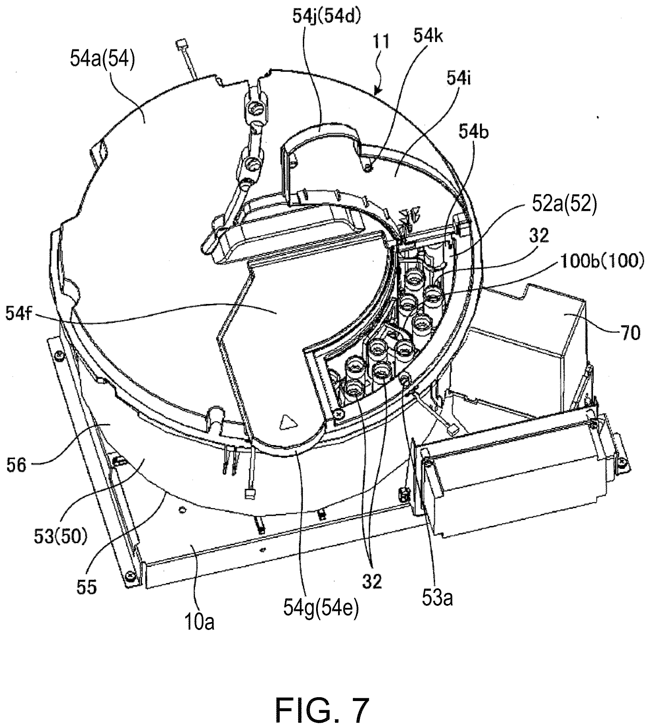

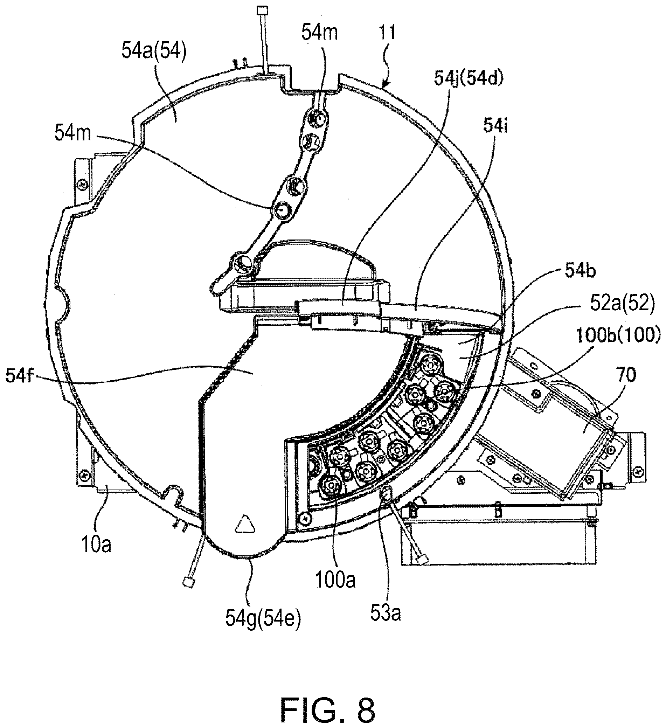

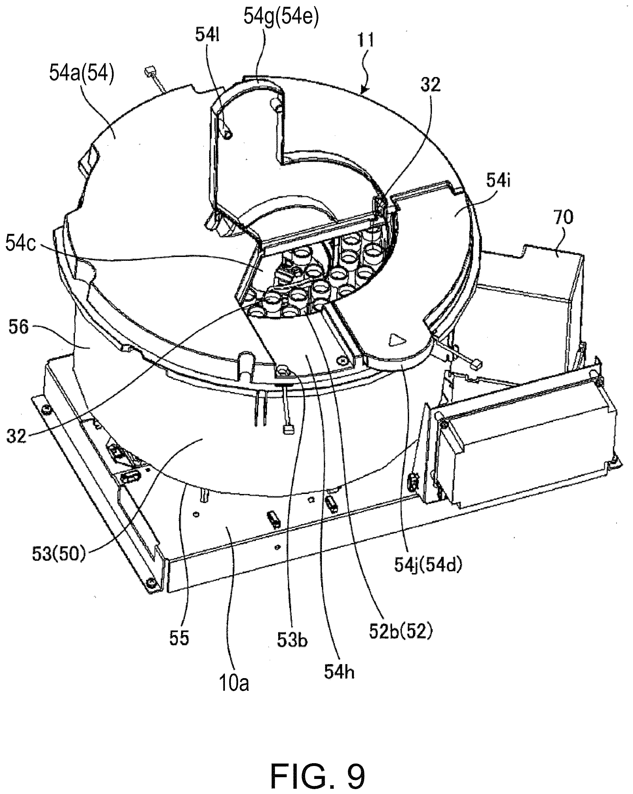

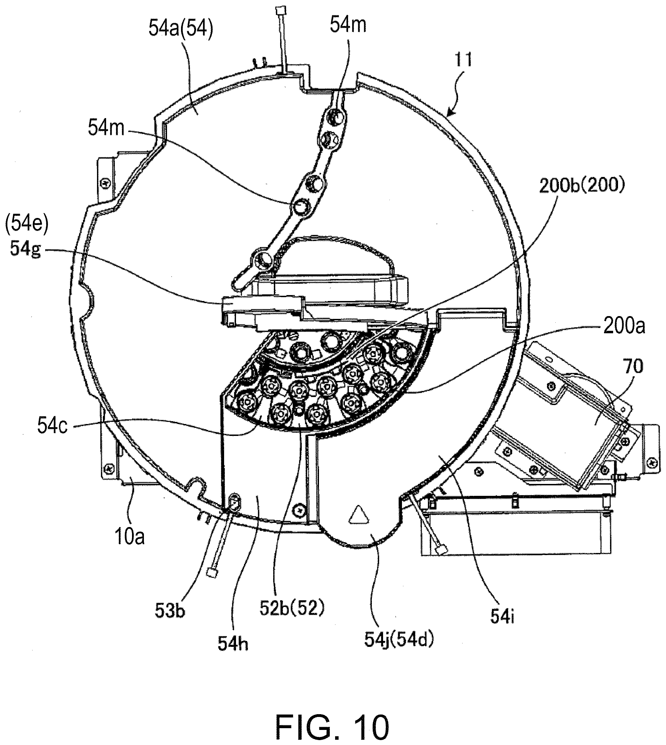

The wall part 54a is formed with open sections 54b and 54c. As illustrated in Figs. 7 and 8, the open section 54b exposes a partial section (area) 52a of the accommodation space 52 which is on the radially outward side of the partition 60 with respect to the rotational axis Ax1 and adjacent to the partition 60. The open section 54b has a size large enough for the specimen containers 32 which are detachably attached to the rotational support 31A (rack 100) to pass through. As illustrated in Figs. 9 and 10, the open section 54c exposes a partial section (area) 52b of the accommodation space 52 which is on the radially inward side of the partition 60 with respect to the rotational axis Ax1 and adjacent to the partition 60. The open section 54c has a size large enough for the specimen containers 32 which are detachably attached to the rotational support 31B (rack 200) to pass through. The open section 54b is one example of the first open section of this disclosure, and the open section 54c is one example of the second open section of this disclosure.

The lid 54d is provided to (supported by) the wall part 54a so as to be openable. The lid 54d covers the open section 54b. The lid 54d has a cover portion 54i which covers the specimen containers 32 supported by the rotational support 31A in a closed state of the lid 54d, and an extension portion 54j extending radially outward from the cover portion 54i with respect to the rotational axis Ax1 in the closed state. A protrusion 54k is provided on a lower surface of the cover portion 54i. In the closed state, the protrusion 54k is inserted into a dent 53a formed in an upper end part of the main body 53. The dent 53a is provided with a detection sensor configured to detect the protrusion 54k inside the dent 53a. The lid 54d is one example of the first lid of this disclosure.

The lid 54e covers the open section 54c. The lid 54e has a cover portion 54f which covers the specimen containers 32 supported by the rotational support 31B in a closed state of the lid 54e, and an extension portion 54g extending radially outward from the cover portion 54f with respect to the rotational axis Ax1 in the closed state. The extension portion 54g overlaps with an overlapping portion 54h of the wall part 54a (Fig. 24). A protrusion 541 (Fig. 24) is provided on a lower surface of the cover portion 54f. In the closed state, the protrusion 541 is inserted into a dent 53b formed in the upper end part of the main body 53. The dent 53b is provided with a detection sensor configured to detect the protrusion 541 inside the dent 53b. The lid 54e is one example of the second lid of this disclosure.

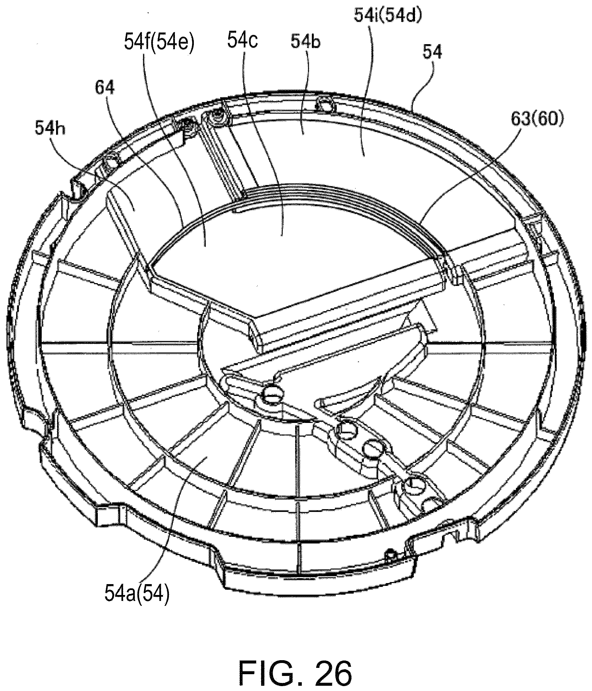

Further as illustrated in Fig. 26, partition walls 63 and 64 are provided on a lower surface of the wall part 54a. The partition walls 63 and 64 constitute the partition 60. The partition wall 63 extends toward the partition wall 61 from a position of the wall part 54a corresponding to the open section 54b. The partition wall 63 has an arc extending circumferentially. In other words, the partition wall 63 is not annular. The partition wall 63 overlaps with the partition wall 61 in the directions of the rotational axis Ax1 (axial directions). The partition wall 64 extends toward the partition wall 62 from a position of the wall part 54a corresponding to the open section 54c. The partition wall 64 has an arc extending circumferentially. In other words, the partition wall 64 is not annular. The partition wall 64 overlaps with the partition wall 62 in the directions of the rotational axis Ax1. The partition wall 63 is one example of the third partition wall of this disclosure, and the partition wall 64 is one example of the fourth partition wall of this disclosure.

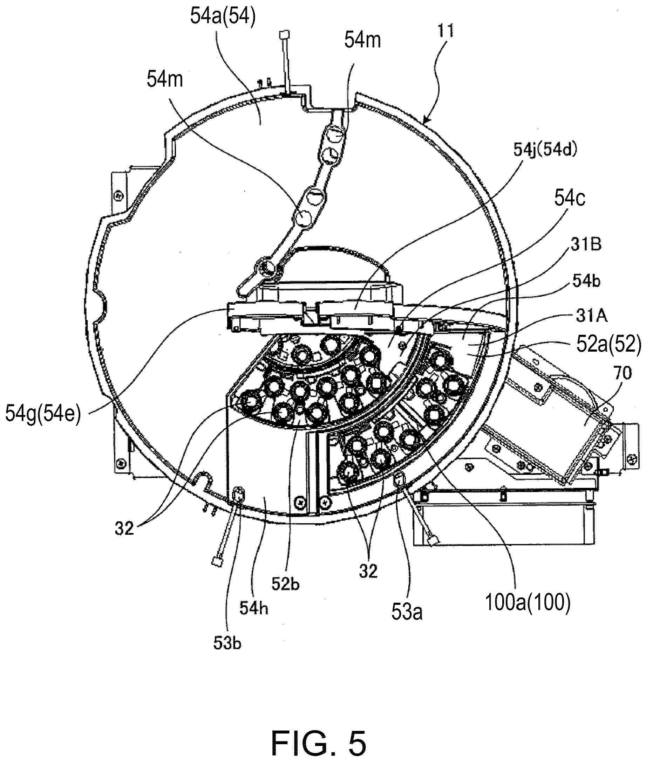

Further as illustrated in Fig. 5, the wall part 54a is formed with a plurality of open sections 54m into which the pipette 37 may be inserted. The pipette 37 is inserted into the reagent container 34 through the open section 54m.

As described above, in this embodiment, the partition 60 is located between the specimen containers 32 supported by the rotational support 31A and the specimen containers 32 supported by the rotational support 31B, and extends circumferentially. Thus, when an operator attaches/removes the specimen containers 32 to/from one of rotational supports 31A and 31B, a hand of the operator does not easily touch the specimen containers 32 supported by the other one of the rotational supports 31A and 31B.

Further in this embodiment, the cover 54 is provided with the wall part 54a, the open section 54b exposing the partial section 52a of the accommodation space 52 which is on the radially outward side of the partition 60 with respect to the rotational axis Ax1 and adjacent to the partition 60 and through which the specimen containers 32 which are removably attached to the rotational support 31A pass, and the open section 54c exposing the partial section 52b of the accommodation space 52 which is on the radially inward side of the partition 60 with respect to the rotational axis Ax1 and adjacent to the partition 60 and through which the specimen containers 32 which are removably attached to the rotational support 31B pass. Thus, when the operator attaches/removes the specimen containers 32 to/from one of rotational supports 31A and 31B, the hand of the operator does not easily touch the specimen containers 32 supported by the other one of the rotational supports 31A and 31B.

Further in this embodiment, the partition walls 61 and 62 of the partition 60 are provided to the rotational supports 31A and 31B, and have the cylindrical shapes centering on the rotational axis Ax1. Thus, even with the cover 54 removed, the hand of the operator does not easily touch the specimen containers 32 supported by the other one of the rotational supports 31A and 31B.

Further in this embodiment, the partition walls 63 and 64 of the partition 60 extend toward the partition walls 61 and 62 from the positions of the wall part 54a corresponding to the open sections 54b and 54c, respectively. Thus, when attaching the racks 100 and 200, they may be guided by the partition walls 63 and 64 and, as a result, it is prevented that the racks 100 and 200 are caught by upper ends of the partition walls 61 and 62.

Further in this embodiment, the wall part 54a has the overlapping portion 54h overlapping with the extension portion 54g of the lid 54e. Thus, even when the lid 54e is open, the specimen containers 32 supported by the rotational support 31A are covered by the overlapping portion 54h.

Further in this embodiment, the partition 60 is formed with the open sections 61a and 62a through which the light emitted from the bar code reader 70 and the reflection light caused by the emitted light reflecting on the bar code 71 which is provided on the specimen container 32 supported by the rotational support 31B penetrate. As a result, the bar code 71 is readable by the bar code reader 70.

Note that, one of the partition walls 61 and 62 may be omitted.

### <Example not according to the present invention>

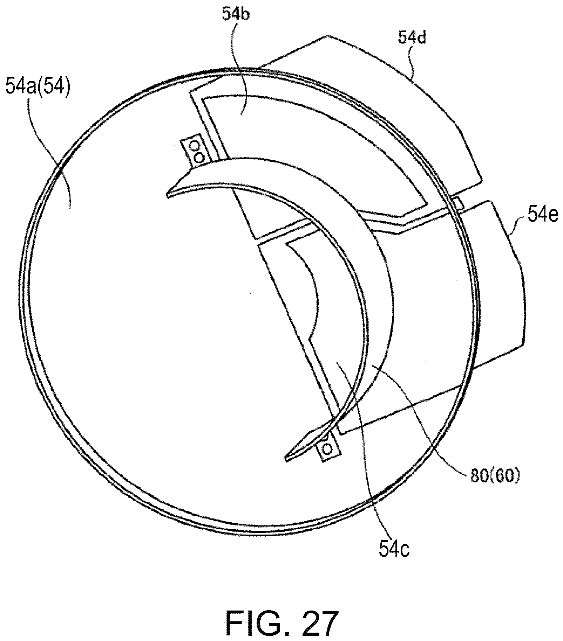

As illustrated in Fig. 27, in an example not according to the present invention, the partition 60 has a partition wall 80 provided to the cover 54. Note that the partition walls 61 to 64 are not provided in this example. The partition wall 80 extends downward from the lower surface of the wall part 54a. The partition wall 80 has an arc extending circumferentially. In other words, the partition wall 80 is not annular. The partition wall 80 is located between the specimen containers 32 supported by the rotational support 31A and the specimen containers 32 supported by the rotational support 31B. With this kind of structure, since the partition wall 80 is not annular, the partition 60 is easily simplified.

Note that in the embodiments and examples described above, similar to the specimen storage 11, the reagent storage 12 may have the housing 50 and the partition 60. Further the open sections 54b and 54c may be integrated as a single open section.

Although the embodiments of this disclosure are described above, the embodiments described above are merely some examples. The embodiments may be implemented in other various modes, and various omissions, replacements, combinations and changes may be applied without deviating from the scope of this disclosure which is defined by the appended claims. Moreover, the configurations and shapes of the embodiments may partially be replaced with other configurations and shapes. Furthermore, the specifications of each configuration, shape etc. (structure, kind, direction, angle, shape, size, length, width, thickness, height, number, arrangement, position, material etc.) may suitably be changed. For example, in the embodiment described above, the biochemical analyzer 1 is illustratively described as one example of the specimen analyzer; however, it is not limited to this. For example, the analyzer may be an immunoassay analyzer. Further, each partition wall may be made of a light-transparent material. The partition may have a stick-like member and/or a fence-like member. In this case, a plurality of stick-like members and/or a plurality of fence-like members may be arranged circumferentially at a given space interval.

## Claims

1. An analyzer (1), comprising:
a housing (50);
a first rack (100) having a plurality of supporting parts (100a) configured to support first containers (32, 34);
a first rotational support (31A, 33A) accommodated in the housing (50) and configured to detachably support the first rack (100) at a first position and rotate about a rotational axis (Ax1, Ax2) with respect to the housing (50);
a second rack (200) having a plurality of supporting parts (200a) configured to support second containers (32, 34);
a second rotational support (31B, 33B) accommodated in the housing (50) and configured to detachably support the second rack (200) at a second position radially inward of the first position with respect to the rotational axis (Ax1, Ax2) and rotate about the rotational axis (Ax1, Ax2) with respect to the housing (50), the first rotational support (31A, 33A) and the second rotational support (31B, 33B) being individually rotatable about the rotational axis (Ax1, Ax2);
a partition (60) disposed between the first position and the second position; and
a cover member (54) provided to the housing (50),
wherein the housing (50) is formed with an accommodation space (52) accommodating the first and second rotational supports (31A, 33A, 31B, 33B),
wherein the cover member (54) is provided with:
a wall part (54a) formed with a first open section (54b) and a second open section (54c) and covering the first and second rotational supports (31A, 33A, 31B, 33B) in an extension direction of the rotational axis (Ax1, Ax2);
the first open section (54b) exposing a partial section (52a) of the accommodation space (52) and through which the first rack (100) removably attached to the first rotational support (31A, 33A) is configured to be inserted, the partial section (52a) located radially outward of the partition (60) with respect to the rotational axis (Ax1, Ax2) and adjacent to the partition (60); and
the second open section (54c) exposing a partial section (52b) of the accommodation space (52) and through which the second rack (200) removably attached to the second rotational support (31B, 33B) is configured to be inserted, the partial section (52b) located radially inward of the partition (60) with respect to the rotational axis (Ax1, Ax2) and formed adjacent to the partition (60), and
wherein the partition (60) has
a first partition wall (61) having a cylindrical shape centering on the rotational axis (Ax1, Ax2) and provided to the first rotational support (31A, 33A), and
a third partition wall (63) being provided on a lower surface of the wall part (54a), and overlapping with the first partition wall (61) in the extension direction of the rotational axis (Ax1, Ax2), wherein the third partition wall (63) has an arc and said arc extends to the first partition wall (61) from a position of the wall part (54a) corresponding to a circumference of the first open section (54b).

2. The analyzer (1) of claim 1, wherein the partition (60) has a second partition wall (62) having a cylindrical shape centering on the rotational axis (Ax1, Ax2) and provided to the second rotational support (31B, 33B), and wherein the partition (60) has a fourth partition wall (64) being provided on a lower surface of the wall part (54a), and overlapping with the second partition wall (62) in the extension direction of the rotational axis (Ax1, Ax2), wherein the fourth partition wall (63) has an arc and said arc extends to the second partition wall (62) from a position of the wall part (54a) corresponding to a circumference of the second open section (54c).

3. An analyzer (1), comprising:
a housing (50);
a first rack (100) having a plurality of supporting parts (100a) configured to support first containers (32, 34);
a first rotational support (31A, 33A) accommodated in the housing (50) and configured to detachably support the first rack (100) at a first position and rotate about a rotational axis (Ax1, Ax2) with respect to the housing (50);
a second rack (200) having a plurality of supporting parts (200a) configured to support second containers (32, 34);
a second rotational support (31B, 33B) accommodated in the housing (50) and configured to detachably support the second rack (200) at a second position radially inward of the first position with respect to the rotational axis (Ax1, Ax2) and rotate about the rotational axis (Ax1, Ax2) with respect to the housing (50), the first rotational support (31A, 33A) and the second rotational support (31B, 33B) being individually rotatable about the rotational axis (Ax1, Ax2);
a partition (60) disposed between the first position and the second position; and
a cover member (54) provided to the housing (50),
wherein the housing (50) is formed with an accommodation space (52) accommodating the first and second rotational supports (31A, 33A, 31B, 33B),
wherein the cover member (54) is provided with:
a wall part (54a) formed with a first open section (54b) and a section open section (54c) and covering the first and second rotational supports (31A, 33A, 31B, 33B) in an extension direction of the rotational axis (Ax1, Ax2);
the first open section (54b) exposing a partial section (52a) of the accommodation space (52) and through which the first rack (100) removably attached to the first rotational support (31A, 33A) is configured to be inserted, the partial section (52a) located radially outward of the partition (60) with respect to the rotational axis (Ax1, Ax2) and adjacent to the partition (60); and
the second open section (54c) exposing a partial section (52b) of the accommodation space (52) and through which the second rack (200) removably attached to the second rotational support (31B, 33B) is configured to be inserted, the partial section (52b) located radially inward of the partition (60) with respect to the rotational axis (Ax1, Ax2) and formed adjacent to the partition (60), and
wherein the partition (60) has
a second partition wall (62) having a cylindrical shape centering on the rotational axis (Ax1, Ax2) and provided to the second rotational support (31B, 33B) and
a fourth partition wall (64) being provided on a lower surface of the wall part (54a), and overlapping with the second partition wall (62) in the extension direction of the rotational axis (Ax1, Ax2), wherein the fourth partition wall (63) has an arc and said arc extends to the second partition wall (62) from a position of the wall part (54a) corresponding to a circumference of the second open section (54c).

4. The analyzer (1) of claim 3, wherein the partition (60) has a first partition wall (61) having a cylindrical shape centering on the rotational axis (Ax1, Ax2) and provided to the first rotational support (31A, 33A).

5. The analyzer (1) of any one of claims 1 to 4, wherein the partition (60) is formed with an open section (61a, 62a) through which a light emitted from a bar code reader (70) and a reflection light caused by the emitted light reflecting on a bar code (71) penetrate, the bar code (71) being provided to the second container (32, 34).

6. The analyzer (1) of any one of claims 1 to 5, further comprising:
a first lid (54d) provided to the wall part (54a) to be openable and configured to cover the first open section (54b); and
a second lid (54e) provided to the wall part (54a) to be openable and configured to cover the second open section (54c),
wherein the second lid (54e) having a cover portion (54f) that covers the second rotational support (31B, 33B) in a closed state of the second lid (54e), and an extension portion (54g) extending radially outward from the cover portion (54f) in the closed state,
wherein the wall part (54a) has an overlapping portion (54h) overlapping with the extension portion (54g) in the closed state.

## Patentansprüche

1. Analysator (1), aufweisend:
ein Gehäuse (50);
ein erstes Gestell (100), das eine Vielzahl von Tragteilen (100a) aufweist, die dafür konfiguriert sind, erste Behälter (32, 34) zu tragen;
einen ersten Drehträger (31A, 33A), der im Gehäuse (50) untergebracht und dafür konfiguriert ist, das erste Gestell (100) an einer ersten Position abnehmbar zu tragen und um eine Drehachse (Ax1, Ax2) in Bezug auf das Gehäuse (50) zu drehen;
ein zweites Gestell (200), das eine Vielzahl von Tragteilen (200a) aufweist, die dafür konfiguriert sind, zweite Behälter (32, 34) zu tragen;
einen zweiten Drehträger (31B, 33B), der im Gehäuse (50) untergebracht und dafür konfiguriert ist, das zweite Gestell (200) an einer zweiten Position radial einwärts der ersten Position in Bezug auf die Drehachse (Ax1, Ax2) abnehmbar zu tragen und um die Drehachse (Ax1, Ax2) in Bezug auf das Gehäuse (50) zu drehen, wobei der erste Drehträger (31A, 33A) und der zweite Drehträger (31B, 33B) individuell um die Drehachse (Ax1, Ax2) drehbar sind;
eine Abtrennung (60), die zwischen der ersten Position und der zweiten Position angeordnet ist; und
ein Abdeckelement (54), das am Gehäuse (50) angebracht ist,
wobei das Gehäuse (50) mit einem Aufnahmeraum (52) ausgebildet ist, der die ersten und zweiten Drehträger (31A, 33A, 31B, 33B) aufnimmt,
wobei das Abdeckelement (54) versehen ist mit:
einem Wandteil (54a), das mit einem ersten offenen Abschnitt (54b) und einem zweiten offenen Abschnitt (54c) ausgebildet ist und die ersten und zweiten Drehträger (31A, 33A, 31B, 33B) in einer Erstreckungsrichtung der Drehachse (Ax1, Ax2) abdeckt;
wobei der erste offene Abschnitt (54b) einen Teilabschnitt(52a) des Aufnahmeraums (52) freilegt und durch den das am ersten Drehträger (31A, 33A) entfernbar angebrachte erste Gestell (100) eingesetzt werden kann, wobei der Teilabschnitt (52a) radial außerhalb der Abtrennung (60) in Bezug auf die Drehachse (Ax1, Ax2) und der Abtrennung (60) benachbart gelegen ist; und
wobei der zweite offene Abschnitt (54c) einen Teilabschnitt (52b) des Aufnahmeraums (52) freilegt und durch den das am zweiten Drehträger (31B, 33B) entfernbar angebrachte zweite Gestell (200) eingesetzt werden kann, wobei der Teilabschnitt (52b) radial innerhalb der Abtrennung (60) in Bezug auf die Drehachse (Ax1, Ax2) gelegen und der Abtrennung (60) benachbart ausgebildet ist, und
wobei die Abtrennung (60) aufweist:
eine erste Trennwand (61), die eine auf der Drehachse (Ax1, Ax2) zentrierende zylindrische Form hat und an dem ersten Drehträger (31A, 33A) angeordnet ist; und
eine dritte Trennwand (63), die auf einer unteren Oberfläche des Wandteils (54a) angeordnet ist und mit der ersten Trennwand (61) in der Erstreckungsrichtung der Drehachse (Ax1, Ax2) überlappt, wobei die dritte Trennwand (63) einen Bogen aufweist und sich der Bogen von einer Position des Wandteils (54a) entsprechend einem Umfang des ersten offenen Abschnitts (54b) zur ersten Trennwand (61) erstreckt.

2. Analysator (1) nach Anspruch 1, wobei die Abtrennung (60) eine zweite Trennwand (62) aufweist, die eine auf der Drehachse (Ax1, Ax2) zentrierende zylindrische Form hat und an dem zweiten Drehträger (31B, 33B) angeordnet ist,
und wobei die Abtrennung (60) eine vierte Trennwand (64) aufweist, die auf einer unteren Oberfläche des Wandteils (54a) angeordnet ist und mit der zweiten Trennwand (62) in der Erstreckungsrichtung der Drehachse (Ax1, Ax2) überlappt, wobei die vierte Trennwand (64) einen Bogen aufweist und sich der Bogen von einer Position des Wandteils (54a) entsprechend einem Umfang des zweiten offenen Abschnitts (54c) zur zweiten Trennwand (62) erstreckt.

3. Analysator (1), aufweisend:
ein Gehäuse (50);
ein erstes Gestell (100), das eine Vielzahl von Tragteilen (100a) aufweist, die dafür konfiguriert sind, erste Behälter (32, 34) zu tragen;
einen ersten Drehträger (31A, 33A), der im Gehäuse (50) untergebracht und dafür konfiguriert ist, das erste Gestell (100) an einer ersten Position abnehmbar zu tragen und um eine Drehachse (Ax1, Ax2) in Bezug auf das Gehäuse (50) zu drehen;
ein zweites Gestell (200), das eine Vielzahl von Tragteilen (200a) aufweist, die dafür konfiguriert sind, zweite Behälter (32, 34) zu tragen;
einen zweiten Drehträger (31B, 33B), der im Gehäuse (50) untergebracht und dafür konfiguriert ist, das zweite Gestell (200) an einer zweiten Position radial einwärts der ersten Position in Bezug auf die Drehachse (Ax1, Ax2) abnehmbar zu tragen und um die Drehachse (Ax1, Ax2) in Bezug auf das Gehäuse (50) zu drehen, wobei der erste Drehträger (31A, 33A) und der zweite Drehträger (31B, 33B) individuell um die Drehachse (Ax1, Ax2) drehbar sind;
eine Abtrennung (60), die zwischen der ersten Position und der zweiten Position angeordnet ist; und
ein Abdeckelement (54), das am Gehäuse (50) angebracht ist,
wobei das Gehäuse (50) mit einem Aufnahmeraum (52) ausgebildet ist, der die ersten und zweiten Drehträger (31A, 33A, 31B, 33B) aufnimmt,
wobei das Abdeckelement (54) versehen ist mit:
einem Wandteil (54a), das mit einem ersten offenen Abschnitt (54b) und einem zweiten offenen Abschnitt (54c) ausgebildet ist und die ersten und zweiten Drehträger (31A, 33A, 31B, 33B) in einer Erstreckungsrichtung der Drehachse (Ax1, Ax2) abdeckt;
wobei der erste offene Abschnitt (54b) einen Teilabschnitt(52a) des Aufnahmeraums (52) freilegt und durch den das am ersten Drehträger (31A, 33A) entfernbar angebrachte erste Gestell (100) eingesetzt werden kann, wobei der Teilabschnitt (52a) radial außerhalb der Abtrennung (60) in Bezug auf die Drehachse (Ax1, Ax2) und der Abtrennung (60) benachbart gelegen ist; und
wobei der zweite offene Abschnitt (54c) einen Teilabschnitt (52b) des Aufnahmeraums (52) freilegt und durch den das am zweiten Drehträger (31B, 33B) entfernbar angebrachte zweite Gestell (200) eingesetzt werden kann, wobei der Teilabschnitt (52b) radial innerhalb der Abtrennung (60) in Bezug auf die Drehachse (Ax1, Ax2) gelegen und der Abtrennung (60) benachbart ausgebildet ist, und
wobei die Abtrennung (60) aufweist:
eine zweite Trennwand (62), die eine auf der Drehachse (Ax1, Ax2) zentrierende zylindrische Form hat und an dem zweiten Drehträger (31B, 33B) angeordnet ist; und
eine vierte Trennwand (64), die auf einer unteren Oberfläche des Wandteils (54a) angeordnet ist und mit der zweiten Trennwand (62) in der Erstreckungsrichtung der Drehachse (Ax1, Ax2) überlappt, wobei die vierte Trennwand (64) einen Bogen aufweist und sich der Bogen von einer Position des Wandteils (54a) entsprechend einem Umfang des zweiten offenen Abschnitts (54c) zur zweiten Trennwand (62) erstreckt.

4. Analysator (1) nach Anspruch 3, wobei die Abtrennung (60) eine erste Trennwand (61) aufweist, die eine auf der Drehachse (Ax1, Ax2) zentrierende zylindrische Form hat und an dem ersten Drehträger (31A, 33A) angeordnet ist.

5. Analysator (1) nach einem der Ansprüche 1 bis 4, wobei die Abtrennung (60) mit einem offenen Abschnitt (61a, 62a) ausgebildet ist, durch den von einem Strichcode-Lesegerät (70) emittiertes Licht und Reflexionslicht, das durch das an einem Strichcode (71) reflektierte emittierte Licht hervorgerufen wird, hindurchgehen, wobei der Strichcode (71) an dem zweiten Behälter (32, 34) angeordnet ist.

6. Analysator (1) nach einem der Ansprüche 1 bis 5, ferner aufweisend:
einen ersten Deckel (54d), der an dem Wandteil (54a) so angeordnet ist, dass er geöffnet werden kann, und dafür konfiguriert ist, den ersten offenen Abschnitt (54b) abzudecken; und
einen zweiten Deckel (54e), der an dem Wandteil (54a) so angeordnet ist, dass er geöffnet werden kann, und dafür konfiguriert ist, den zweiten offenen Abschnitt (54c) abzudecken,
wobei der zweite Deckel (54e) ein Abdeckteilstück (54f), das den zweiten Drehträger (31B, 33B) in einem geschlossenen Zustand des zweiten Deckels (54e) abdeckt, und ein Verlängerungsteilstück (54g) aufweist, das sich vom Abdeckteilstück (54f) im geschlossenen Zustand radial nach außen erstreckt,
wobei das Wandteil (54a) ein überlappendes Teilstück (54h) aufweist, das mit dem Verlängerungsteilstück (54g) im geschlossenen Zustand überlappt.

## Revendications

1. Analyseur (1), comprenant :
un logement (50) ;
un premier râtelier (100) ayant une pluralité de parties de support (100a) configurées pour supporter des premiers récipients (32, 34) ;
un premier support de rotation (31A, 33A) accueilli dans le logement (50) et configuré pour supporter de manière détachable le premier râtelier (100) à une première position et tourner autour d'un axe de rotation (Ax1, Ax2) par rapport au logement (50) ;
un deuxième râtelier (200) ayant une pluralité de parties de support (200a) configurées pour supporter des deuxièmes récipients (32, 34) ;
un deuxième support de rotation (31B, 33B) accueilli dans le logement (50) et configuré pour supporter de manière détachable le deuxième râtelier (200) à une deuxième position radialement vers l'intérieur de la première position par rapport à l'axe de rotation (Ax1, Ax2) et tourner autour de l'axe de rotation (Ax1, Ax2) par rapport au logement (50), le premier support de rotation (31A, 33A) et le deuxième support de rotation (31B, 33B) pouvant individuellement tourner autour de l'axe de rotation (Ax1, Ax2) ;
une séparation (60) disposée entre la première position et la deuxième position ; et
un organe de recouvrement (54) prévu au logement (50),
dans lequel le logement (50) est formé d'un espace d'accueil (52) accueillant les premier et deuxième supports de rotation (31A, 33A, 31B, 33B),
dans lequel l'organe de recouvrement (54) est doté de :
une partie de paroi (54a) formée d'une première section ouverte (54b) et d'une deuxième section ouverte (54c) et recouvrant les premier et deuxième supports de rotation (31A, 33A, 31B, 33B) dans une direction d'extension de l'axe de rotation (Ax1, Ax2) ;
la première section ouverte (54b) exposant une section partielle (52a) de l'espace d'accueil (52) et à travers laquelle le premier râtelier (100) fixé de manière amovible au premier support de rotation (31A, 33A) est configuré pour être inséré, la section partielle (52a) étant située radialement vers l'extérieur de la séparation (60) par rapport à l'axe de rotation (Ax1, Ax2) et adjacente à la séparation (60) ; et
la deuxième section ouverte (54c) exposant une section partielle (52b) de l'espace d'accueil (52) et à travers laquelle le deuxième râtelier (200) fixé de manière amovible au deuxième support de rotation (31B, 33B) est configuré pour être inséré, la section partielle (52b) étant située radialement vers l'intérieur de la séparation (60) par rapport à l'axe de rotation (Ax1, Ax2) et formée adjacente à la séparation (60), et
dans lequel la séparation (60) a
une première paroi de séparation (61) ayant une forme cylindrique centrée sur l'axe de rotation (Ax1, Ax2) et prévue au premier support de rotation (31A, 33A), et
une troisième paroi de séparation (63) étant prévue sur une surface inférieure de la partie de paroi (54a) et chevauchant la première paroi de séparation (61) dans la direction d'extension de l'axe de rotation (Ax1, Ax2), dans lequel la troisième paroi de séparation (63) a un arc et ledit arc s'étend jusqu'à la première paroi de séparation (61) depuis une position de la partie de paroi (54a) correspondant à une circonférence de la première section ouverte (54b).

2. Analyseur (1) selon la revendication 1, dans lequel la séparation (60) a une deuxième paroi de séparation (62) ayant une forme cylindrique centrée sur l'axe de rotation (Ax1, Ax2) et prévue au deuxième support de rotation (31B, 33B), et dans lequel la séparation (60) a une quatrième paroi de séparation (64) étant prévue sur une surface inférieure de la partie de paroi (54a) et chevauchant la deuxième paroi de séparation (62) dans la direction d'extension de l'axe de rotation (Ax1, Ax2), dans lequel la quatrième paroi de séparation (63) a un arc et ledit arc s'étend jusqu'à la deuxième paroi de séparation (62) depuis une position de la partie de paroi (54a) correspondant à une circonférence de la deuxième section ouverte (54c).

3. Analyseur (1), comprenant :
un logement (50) ;
un premier râtelier (100) ayant une pluralité de parties de support (100a) configurées pour supporter des premiers récipients (32, 34) ;
un premier support de rotation (31A, 33A) accueilli dans le logement (50) et configuré pour supporter de manière détachable le premier râtelier (100) à une première position et tourner autour d'un axe de rotation (Ax1, Ax2) par rapport au logement (50) ;
un deuxième râtelier (200) ayant une pluralité de parties de support (200a) configurées pour supporter des deuxièmes récipients (32, 34) ;
un deuxième support de rotation (31B, 33B) accueilli dans le logement (50) et configuré pour supporter de manière détachable le deuxième râtelier (200) à une deuxième position radialement vers l'intérieur de la première position par rapport à l'axe de rotation (Ax1, Ax2) et tourner autour de l'axe de rotation (Ax1, Ax2) par rapport au logement (50), le premier support de rotation (31A, 33A) et le deuxième support de rotation (31B, 33B) pouvant individuellement tourner autour de l'axe de rotation (Ax1, Ax2) ;
une séparation (60) disposée entre la première position et la deuxième position ; et
un organe de recouvrement (54) prévu au logement (50),
dans lequel le logement (50) est formé d'un espace d'accueil (52) accueillant les premier et deuxième supports de rotation (31A, 33A, 31B, 33B),
dans lequel l'organe de recouvrement (54) est doté de :
une partie de paroi (54a) formée d'une première section ouverte (54b) et d'une deuxième section ouverte (54c) et recouvrant les premier et deuxième supports de rotation (31A, 33A, 31B, 33B) dans une direction d'extension de l'axe de rotation (Ax1, Ax2) ;
la première section ouverte (54b) exposant une section partielle (52a) de l'espace d'accueil (52) et à travers laquelle le premier râtelier (100) fixé de manière amovible au premier support de rotation (31A, 33A) est configuré pour être inséré, la section partielle (52a) étant située radialement vers l'extérieur de la séparation (60) par rapport à l'axe de rotation (Ax1, Ax2) et adjacente à la séparation (60) ; et
la deuxième section ouverte (54c) exposant une section partielle (52b) de l'espace d'accueil (52) et à travers laquelle le deuxième râtelier (200) fixé de manière amovible au deuxième support de rotation (31B, 33B) est configuré pour être inséré, la section partielle (52b) étant située radialement vers l'intérieur de la séparation (60) par rapport à l'axe de rotation (Ax1, Ax2) et formée adjacente à la séparation (60), et
dans lequel la séparation (60) a
une deuxième paroi de séparation (62) ayant une forme cylindrique centrée sur l'axe de rotation (Ax1, Ax2) et prévue au deuxième support de rotation (31B, 33B), et
une quatrième paroi de séparation (64) étant prévue sur une surface inférieure de la partie de paroi (54a) et chevauchant la deuxième paroi de séparation (62) dans la direction d'extension de l'axe de rotation (Ax1, Ax2), dans lequel la quatrième paroi de séparation (63) a un arc et ledit arc s'étend jusqu'à la deuxième paroi de séparation (62) depuis une position de la partie de paroi (54a) correspondant à une circonférence de la deuxième section ouverte (54c).

4. Analyseur (1) selon la revendication 3, dans lequel la séparation (60) a une première paroi de séparation (61) ayant une forme cylindrique centrée sur l'axe de rotation (Ax1, Ax2) et prévue au premier support de rotation (31A, 33A).

5. Analyseur (1) selon l'une des revendications 1 à 4, dans lequel la séparation (60) est formée d'une section ouverte (61a, 62a) à travers laquelle une lumière émise depuis un lecteur de code-barres (70) et une lumière réfléchie provoquée par la lumière émise se réfléchissant sur un code-barres (71) pénètrent, le code-barres (71) étant prévu au deuxième récipient (32, 34) .

6. Analyseur (1) selon l'une des revendications 1 à 5, comprenant en outre :
un premier couvercle (54d) prévu à la partie de paroi (54a) pour pouvoir être ouvert et configuré pour recouvrir la première section ouverte (54b) ; et
un deuxième couvercle (54e) prévu à la partie de paroi (54a) pour pouvoir être ouvert et configuré pour recouvrir la deuxième section ouverte (54c),
dans lequel le deuxième couvercle (54e) ayant une portion de recouvrement (54f) qui recouvre le deuxième support de rotation (31B, 33B) dans un état fermé du deuxième couvercle (54e), et une portion d'extension (54g) s'étendant radialement vers l'extérieur depuis la portion de recouvrement (54f) dans l'état fermé,
dans lequel la partie de paroi (54a) a une portion de chevauchement (54h) chevauchant la portion d'extension (54g) dans l'état fermé.
